(19) Europäisches Patentamt
European Patent Office
Office européen des brevets

(11) **EP 3 941 878 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **19713754.0**

(22) Anmeldetag: **22.03.2019**

(51) Internationale Patentklassifikation (IPC):
**C01B 33/037** (2006.01)

(52) Gemeinsame Patentklassifikation (CPC):
**C01B 33/037; C01B 33/025;** C01P 2006/80

(86) Internationale Anmeldenummer:
**PCT/EP2019/057287**

(87) Internationale Veröffentlichungsnummer:
**WO 2020/192870 (01.10.2020 Gazette 2020/40)**

(54) **VERFAHREN ZUR HERSTELLUNG VON TECHNISCHEM SILICIUM**

METHOD FOR PRODUCING TECHNICAL SILICON

PROCÉDÉ DE PRODUCTION DE SILICIUM TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.01.2022 Patentblatt 2022/04**

(73) Patentinhaber: **Wacker Chemie AG**
**81737 München (DE)**

(72) Erfinder: **RIMBOECK, Karl-Heinz**
**84431 Heldenstein (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A1- 0 699 625    CN-A- 109 052 407**

- **GRIBOV B G ET AL: "Preparation of High-Purity Silicon for Solar Cells", INORGANIC MATERIALS, Bd. 39, Nr. 7, 2003, Seiten 653-662, XP002597927, PLENUM PUBLISHING CO., NEW YORK, NY, US ISSN: 0020-1685, DOI: 10.1023/A:1024553420534**
- **ALEKSANDAR M.MITRASINOVIC, RYAN D'SOUZA, TORSTEIN A. UTIGARD: "Impurity removal and overall rate constant during low pressure treatment of liquid silicon", JOURNAL OF MATERIALS PROCESSING TECHNOLOGY, Bd. 212, Nr. 1, 2012, Seiten 78-82, XP028103135, DOI: 10.1016/j.jmatprotec.2011.08.006**

**Beschreibung**

Die Erfindung betrifft ein Verfahren zur Herstellung von technischem Silicium aus Siliciumdioxid und Kohlenstoff und einem partikulären Mediator, welcher mindestens eines der Elemente C, O, Al und Si enthält, in einem elektrischen Ofen.

Silicium findet in technischer Qualität, (Si-Gehalt <99,9 Masse-%, auch als technisches Silicium bezeichnet) heute v.a. Anwendung in silicothermischen Prozessen, in der Metallgewinnung, als Desoxidationsmittel bei der Stahlherstellung und dient als Legierungsbestandteil von Gusslegierungen des Aluminiums, Kupfers, Titans und Eisens sowie als Ausgangsmaterial für chemische Verbindungen.

Technisches Silicium entspricht hierbei v.a. sogenanntem "Calciumsilicium" (Calciumdisilicid $CaSi_2$, ca. 60 Masse-% Si und ca. 40 Masse-% Ca), Ferrosilicium (Legierungen aus ca. 45-90 Masse-% Si und ca. 10-55 Masse-% Fe) sowie metallurgischen Silicium (ca. 98-99,5 Masse-% Si).

Industriell wird Silicium von technischer Qualität durch carbothermische Reduktion von Quarz ($SiO_2$, ggfs. weitere Zusätze wie bspw. Fe-haltige Abfallstoffe [Ferrosilicium] oder Calciumcarbid [Calciumsilicium]) bei hohen Temperaturen (um 2000 °C) und Atmosphärendruck im elektrischen Ofen (Lichtbogenreduktionsofen) gemäß Nettoreaktionsgleichung (1) hergestellt. Der Prozess wird im Standardwerk "Production of High Silicon Alloys" (A. Schei, J.K. Tuset, H. Tveit, Production of High Silicon Alloys, 1998, Tapir forlag, Trondheim) beschrieben.

$$SiO_2 + 2\,C \rightarrow Si\,(l) + 2\,CO\,(g) \qquad (1)$$

Während des Betriebs liegen Edukte, Intermediate und Produkte in verschiedenen Aggregatszuständen vor: fest (C, SiC, $SiO_2$, Si), flüssig (Si, $SiO_2$) sowie gasförmig (vorwiegend CO, SiO). Als Kohlenstoffquelle wird üblicherweise eine Reduktionsmischung aus Koks, Petrolkoks, Steinkohle, Holzkohle und Holzteilchen verwendet. Im Ofen herrscht eine stark reduzierende Atmosphäre, die sich v.a. aus SiO und CO zusammensetzt. $SiO_2$ und C bewegen sich im laufenden Betrieb nach unten, während SiO und CO nach oben strömen. Hierbei werden intermediäre Spezies gemäß folgender

Reaktionsgleichungen (2)-(7) gebildet:

$$SiO_2 + C \rightarrow SiO + CO \qquad (2)$$

$$SiO + 2\,C \rightarrow SiC + CO \qquad (3)$$

$$SiO_2 + 2\,SiC \rightarrow 3\,Si + 2\,CO \qquad (4)$$

$$2\,SiO_2 + SiC \rightarrow 3\,SiO + CO \qquad (5)$$

$$SiO_2 + CO \rightarrow SiO + CO_2 \qquad (6)$$

$$2\,CO_2 + SiC \rightarrow SiO + 3\,CO \qquad (7)$$

Silicium wird hauptsächlich durch die in Reaktion (8) gezeigte Reaktion gebildet.

$$SiO + SiC \rightarrow 2\,Si + CO \qquad (8)$$

Bei der Herstellung von technischem Silicium unerwünscht sind Reaktionen (9) und (10). Verlässt SiO den Ofen, erfolgt die Bildung von $SiO_2$ durch Oxidation an der Umgebungsluft gemäß Reaktion (9), woraus sich durch Agglomeration das feinteilige Nebenprodukt Microsilica bildet, welches über das Abgassystem den Reaktionsraum verlässt und letztlich einen Ausbeuteverlust bedeutet. Durch die Kondensationsreaktion (10) bilden sich glasartige Zonen im oberen Teil des Ofens, welche das Entweichen von Abgasen behindern können.

$$2\,SiO + O_2 \rightarrow 2\,SiO_2 \qquad (9)$$

$$2\,SiO \rightarrow Si + SiO_2 \qquad (10)$$

Es ist deshalb nicht nur unter wirtschaftlichen Gesichtspunkten, insbesondere dem Verlust durch Bildung von Microsilica wichtig, SiO bestmöglich zu nutzen, sondern auch die Anlagensicherheit betreffend. Die Dokumente CN109052407A, EP0699625 A1 und WO2010/037709 A1 beschreiben Verfahren zur Herstellung von technischem Silicium.

Neben den wirtschaftlichen Aspekten eines industriellen Prozesses (beispielsweise Produktivität, Herstellkosten) ist auch die Qualität des hergestellten Produkts von entscheidender Bedeutung. Die bei der carbothermischen Reduktion von SiO$_2$ üblicherweise verwendeten Rohstoffe sowie Elektroden enthalten verschiedene Verunreinigungen, die im Fall von technischem Silicium für gewöhnlich zu einem Gehalt von Nebenbestandteilen von 0,5 bis 2 Masse-% im Produkt führen.

Bei Einsatz von technischem Silicium in der Herstellung von chemischen Verbindungen, bspw. Chlorsilanen, werden diese Verunreinigungen (beispielsweise in Form von flüchtigen Chloriden) teilweise - trotz zwischengeschalteter Reinigungsstufen - bis hin zu den jeweiligen Endprodukten (bspw. polykristallines Silicium, Silicone) über mehrere Prozessschritte hinweg verschleppt. Je nach Anwendungsgebiet müssen diese Endprodukte jedoch höchsten Qualitätsanforderungen genügen (Halbleiter-/ Pharma-/Nahrungsmittel-/Kosmetik-Industrien). Für die Herstellung selbiger Produkte im industriellen Maßstab ist daher ein qualitativ hochwertiger Ausgangsstoff - technisches Silicium - wichtig.

Grundsätzlich sind metallurgische Verfahren zur Herstellung von Silicium aufwendig und energieintensiv (*Schei et al.*). Die erforderliche Energiezufuhr, die in der Regel elektrisch erfolgt, stellt einen erheblichen Kostenfaktor dar. Die operative Leistung (bspw. gemessen an der Menge an gebildetem technischem Silicium pro Zeiteinheit und Reaktionsvolumen, spezifische Energienutzung) der carbothermischen Reduktion von Quarz im elektrischen Ofen hängt entscheidend von den Rohstoffen und den entsprechenden Rezepturen (wie die Rohstoffe dem Reduktionsprozess zugeführt werden) ab.

Die Aufgabe der vorliegenden Erfindung bestand darin, die Wirtschaftlichkeit der Herstellung von technischem Silicium zu verbessern, ohne die Qualität des Produkts negativ zu beeinflussen.

Gegenstand der Erfindung ist ein Verfahren zur Herstellung von technischem Silicium,

bei dem eine Mischung aus einer Rohstoffmischung, die Siliciumdioxid und Kohlenstoff enthält,
mit einem partikulären Mediator, welcher mindestens eines der Elemente C, O, Al und Si enthält, in einem elektrischen Ofen umgesetzt wird wobei
die Mischung durch eine dimensionslose Kennzahl K beschrieben ist, wobei K einen Wert von 0 bis 745 aufweist und wie folgt berechnet wird:

$$K = \omega_M \cdot \beta_{RM} \cdot \mu_C \qquad\qquad \text{Gleichung (1)}$$

mit:

$$\omega_M = \frac{6 \cdot (1 - \varepsilon_{m,M})}{d_{50,M}} \qquad\qquad \text{Gleichung (2)}$$

$$\beta_{RM} = d_{90,RM} - d_{10,RM} \qquad\qquad \text{Gleichung (3)}$$

$$\mu_C = \frac{3}{2} - \frac{m_M}{m_{RM}} \qquad\qquad \text{Gleichung (4)}$$

wobei:

| | |
|---|---|
| $\omega_M$ | charakteristischer Oberfläche-zu-Volumen-Koeffizient des partikulären Mediators [1/mm] |
| $\varepsilon_{m,M}$ | mittlere, effektive Porosität des partikulären Mediators |
| $\beta_{RM}$ | Breite einer Partikelgrößenverteilung der Mischung [mm] |
| $\mu_C$ | Massenverhältnis von Mediator zu Rohstoffmischung in der Mischung |
| $d_{50,M}$ | Partikelgröße (Durchmesser) bei 50% des Massendurchgangs der Sieblinie des Mediators [mm] |
| $d_{90,RM}$ | Partikelgröße (Durchmesser) bei 90% des Massendurchgangs der Sieblinie der Rohstoffmischung [mm] |
| $d_{10,RM}$ | Partikelgröße (Durchmesser) bei 10% des Massendurchgangs der Sieblinie der Mischung [mm] |
| $m_M$ | Masse des Mediators in der Mischung [kg] |
| $m_{RM}$ | Masse der Rohstoffmischung in der Mischung [kg]. |

Überraschenderweise hat sich gezeigt, dass sich durch Zusatz eines Mediators, wonach die Mischung einen Wert K von 0 bis 745 aufweist, die Produktivität der Herstellung von technischem Silicium mittels carbothermischer Reduktion von Siliciumdioxid erhöhen lässt. Ursächlich hierfür ist eine Verminderung von Silicium- und Energie-Verlusten durch eine effizientere Nutzung von SiO im elektrischen Ofen.

Das erfindungsgemäße Verfahren erhöht somit die Produktivität des Herstellprozesses für technisches Silicium, beispielsweise gemessen an der Menge an gebildetem technischem Silicium pro Zeiteinheit und Reaktionsvolumen, im Vergleich zu herkömmlichen Verfahren ohne die Qualität des technischen Siliciums zu verringern.

Der partikuläre Mediator enthält zumindest eines oder mehrere der Elemente aus der Gruppe mit C, O, Al und Si oder eine Verbindung oder mehrere Verbindungen dieser Elemente oder Mischungen dieser Elemente und Verbindungen. Neben den bereits beschriebenen Elementen kann der partikuläre Mediator bevorzugt folgende Elemente als Verunreinigungen enthalten: Li, Na, K, Mg, Ca, Ba, Ti, Zr, V, Cr, Mo, W, Mn, Fe, Co, Ni, Cu, Zn, B, Sn, Pb, N, P, As, Sb, Bi, S.

In einer bevorzugten Ausführungsform enthält der Mediator Siliciumreste, die vorzugsweise ausgewählt werden aus Nebenprodukten oder Abfällen, die bei der Herstellung oder bei der mechanischen Bearbeitung von Silicium, wie poly-, multi-oder einkristallinem Silicium anfallen. Bei der mechanischen Bearbeitung kann es sich insbesondere um Brechen, Mahlen und Sägen handeln. Die Siliciumreste enthalten Siliciummetall und/oder Siliciumverbindungen, wie $SiO_2$ und SiC. Eine Aufreinigung der Siliciumreste ist vor dem Einsatz im Mediator üblicherweise nicht erforderlich, d.h. die Siliciumreste können ohne weitere Reinigungsschritte verwendet werden. Vorzugsweise enthält der Mediator mindestens 10 Masse-%, besonders bevorzugt mindestens 20 Masse-% Siliciumreste.

Aufgrund der hohen Reinheit dieser Siliciumreste im Vergleich zu den üblichen Rohstoffen der Herstellung von technischem Silicium wird der Raffinationsaufwand am technischen Silicium für dessen weitere Verwendung mit steigendem Mediator-Anteil an einer Mischung vermindert.

Bevorzugte Komponenten des partikulären Mediators sind $SiO_2$ mit einem bevorzugten Gehalt an $SiO_2$ in Cristobalit-Modifikation >1 Masse-%, SiC, Siliciummetall und Silicium-haltiges Material mit einem bevorzugten Siliciummetall-Gehalt von 30-99,99999 Masse-%, besonders bevorzugt 35-99 Masse-%, insbesondere 40-95 Masse-%. Die Restanteile des partikulären Mediators können bevorzugt folgende Elemente enthalten: C, O, Al, Li, Na, K, Mg, Ca, Ba, Ti, Zr, V, Cr, Mo, W, Mn, Fe, Co, Ni, Cu, Zn, B, Sn, Pb, P, As, Sb, Bi, S, und C. C weist bevorzugt einen Gehalt an fixiertem C von größer 85 Masse-% auf. Al liegt bevorzugt als $Al_2O_3$ vor.

Ist der Mediator eine Mischung aus einzelnen Komponenten, so können die Komponenten jeweils sortenrein als Partikel vorliegen und/oder aus den Einzelkomponenten gezielt Partikel hergestellt werden, z.B. durch Kompaktieren/Agglomerieren, beispielsweise durch Pelletieren oder Sintern. Letzteres ist bevorzugt dann angezeigt, wenn eine oder mehrere der einzelnen Komponenten eine Partikelgröße von <1 mm aufweisen, da diese Partikel aufgrund den vorherrschenden, relativ hohen Gasgeschwindigkeiten, mit denen die Gase den Ofen durchströmen und letztlich als Abgas verlassen, mitgerissen und dem Prozess damit über das Abgassystem entzogen werden. Der Austrag von Rohstoffen und/oder des Mediators vermindert die Wirtschaftlichkeit und gefährdet zudem die Prozessperformance.

Bevorzugt werden die einzelnen Komponenten des Mediators einem Zerkleinerungs- (z.B. Mahlen, Brechen), Klassierungs- (z.B. Sieben, Sichten) und/oder Agglomerisationsverfahren (z.B. Pelletieren, Brikettieren, Sintern) unterzogen, um den gewünschten Wert für Kennzahl K zu erhalten.

Vorzugsweise besteht die im Verfahren eingesetzte Mischung aus den Bestandteilen Siliciumdioxid und Kohlenstoff und dem Mediator.

Vorzugsweise wird im Verfahren in der Rohstoffmischung das Siliciumdioxid aus Quarz und Quarzit ausgewählt. Vorzugsweise wird im Verfahren in der Rohstoffmischung der Kohlenstoff aus Koks, Petrolkoks, Steinkohle, Holzkohle und Holzteilchen ausgewählt.

Der Anteil des Mediators in der Mischung aus Rohstoffmischung und Mediator beträgt vorzugsweise 1 bis 60 Masse-%, besonders bevorzugt 2 bis 50 Masse-%, ganz besonders bevorzugt 3 bis 30 Masse-%, insbesondere 5 bis 20 Masse-%.

Der partikuläre Mediator weist bevorzugt folgende Eigenschaften auf:

mittlere, Massen-gewichtete, effektive Porosität: von 0 bis 1, besonders bevorzugt von 0,05 bis 0,95, ganz besonders bevorzugt von 0,05 bis 0,8, insbesondere 0,05 bis 0,5.

Partikelgröße (Durchmesser) bei 50% des Massendurchgangs der Sieblinie des Mediators, $d_{50,M}$: von 1,5 bis 150 mm, besonders bevorzugt 3 bis 130 mm, ganz besonders bevorzugt 5 bis 100 mm, insbesondere 5 bis 85 mm.

Partikelgröße von 1,5 bis 300 mm, besonders bevorzugt von 5 bis 250 mm, ganz besonders bevorzugt von 10 bis 150 mm, insbesondere von 10 bis 100 mm.

Die Bestandteile der Rohstoffmischung einer Mischung weisen bevorzugt folgende Partikelgrößen auf:

$SiO_2$: Partikelgröße von 5 bis 200 mm, besonders bevorzugt von 10 bis 150 mm, ganz besonders bevorzugt von 25 bis 125 mm, insbesondere von 50 bis 100 mm.

C: Partikelgröße von 1,5 bis 100 mm, besonders bevorzugt von 2 bis 75 mm, ganz besonders bevorzugt von 3 bis 50 mm, insbesondere von 5 bis 30 mm.

Die Bestandteile der Rohstoffmischung einer Mischung werden bevorzugt in folgenden Mol-Verhältnissen $Si/C_{fixiert}$ eingesetzt: von 0,2 bis 0,7, besonders bevorzugt von 0,3 bis 0,6, ganz besonders bevorzugt von 0,35 bis 0,55, insbesondere von 0,4 bis 0,5.

Unter dem Begriff "fixierter Kohlenstoff" ($C_{fixiert}$) ist jener feste, brennbare Rückstand eines C-haltigen Materials zu verstehen, der nach Erhitzen einer Probe für eine Dauer von sieben Minuten bei 900 °C - um seine flüchtigen Bestandteile verringert - zurückbleibt. Die Bestimmung des Cfixiert kann beispielsweise mittels LECO TGA701 bestimmt werden (http://www.leco.co.za/wpcontent/uploads/2012/02/TGA701_COKE_203-821-381.pdf; Probenvorbereitung gemäß ASTM Method D2013 oder ASTM Practice D346)

Ferner weist die Rohstoffmischung einer Mischung bevorzugt die folgenden Eigenschaften auf: $d_{90,RM}$: besonders bevorzugt von 10 bis 120 mm, ganz besonders bevorzugt von 20 bis 110 mm, insbesondere von 50 bis 100 mm $d_{10,RM}$: besonders bevorzugt von 1,5 bis 75 mm, ganz besonders bevorzugt 2 bis 75 mm, insbesondere 3 bis 50 mm.

Die Bestimmung des Silicium-Gehalts der $SiO_2$-Quelle erfolgt bevorzugt über Röntgenfluoreszenzanalyse. Als Nebenbestandteile werden bestimmt: Fe, Al, Ca, Ti, K und Mg.

Die Bestandteile der Mischung können zusammen oder getrennt voneinander in den Ofen gegeben werden. Die Zugabe kann dabei manuell oder automatisiert erfolgen.

Für Mischungen partikulärer Stoffe, die Korndurchmesser von überwiegend > 0,1 mm aufweisen, werden üblicherweise Siebanalysen durchgeführt, um die Partikelmischung zu charakterisieren. Die Bestimmung der Korngrößenverteilung mittels Siebanalyse erfolgt nach DIN 66165. Eine Berechnung von mittleren Partikelgrößen/-durchmessern aus Partikelgrößenverteilungen kann nach DIN ISO 9276-2 erfolgen.

Die Gesamtporosität eines Stoffes setzt sich zusammen aus der Summe der Hohlräume, die untereinander und mit der Umgebung in Verbindung stehen (offene Porosität; in der vorliegenden Erfindung als effektive Porosität bezeichnet) und den nicht miteinander verbundenen Hohlräumen (geschlossene Porosität). Die Porositätsmessungen werden nach dem Archimedischen Prinzip gemäß ASTM C373-88 durchgeführt.

Die Bestimmung des Cristobalit-Gehalts kann bspw. über quantitative Röntgendiffraktion mit einem internen $TiO_2$ (Anatas) Standard erfolgen. (R. C. Breneman and J. W. Halloran, "Kinetics of Cristobalite Formation in Sintered Silica Glass," J. Am. Ceram. Soc., 97, 2272-8 (2014))

## Beispiele:

Es wurden verschiedene Mischungen - jeweils über einen Produktionstag hinweg - in einem Lichtbogenreduktionsofen (spezifischer Energieverbrauch pro Tonne produziertes, abgestochenes Roh-Silicium: 11,2 MWh/t) eingesetzt und die Performance des Prozesses anhand der Bildung des Nebenprodukts Microsilica gemessen. Dazu wurde der Quotient Si-Mengenäquivalent [Microsilica]/Si-Mengenäquivalent [Mischung] für einen Produktionstag bestimmt. Dieser Quotient wird folgend als Verlustquotient (VQ) bezeichnet. Der Prozess gilt bei einem VQ-Wert von 0,15 oder darunter als besonders produktiv.

Üblicherweise liegt dieser Wert zwischen 0,12 und 0,15. Es wurden verschiedene partikuläre Mediatoren in unterschiedlichen Mischungen getestet. Tabelle 1 gibt einen Überblick über die Ergebnisse der Versuche.

## Vergleichsbeispiele (VB) nicht erfindungsgemäß:

Mischungen: Rohstoffmischung ($SiO_2$-Quelle und C-haltige Reduktionsmittel; Mol-Verhältnis Si : fixierter C = 0,4-0,5) sowie bei VB 1 kein Mediator und bei VB 2 zu viel partikulärer Mediator.

## Anwendungsbeispiele (AB):

Mischungen: Rohstoffmischung ($SiO_2$-Quelle und C-haltige Reduktionsmittel; Mol-Verhältnis Si : fixierter C = 0,4-0,5) sowie partikulärer Mediator. Die Elemente Si, Al, 0 und C lagen im Mediator in den Molverhältnissen 6,7 : 1 : 5,6 : 1,8 (Si : Al : O : C) vor; insgesamt - d.h. bezogen auf die Gesamtmasse des Mediators - betrug der Siliciummetall-Anteil 39,8%w. Bei keinem der erfindungsgemäß durchgeführten Versuche wurde die Bildung von glasartigen Zonen gemäß Reaktion (10) beobachtet."

Bestimmung des fixierten C wurde mittels LECO TGA701 bestimmt (http://www.leco.co.za/wpcontent/uploads/2012/02/TGA701_COKE_203-821-381.pdf; Probenvorbereitung gemäß ASTM Method D2013 oder ASTM Practice D346)

Die Bestimmung des Silicium-Gehalts der $SiO_2$-Quelle erfolgte über Röntgenfluoreszenzanalyse. Als Nebenbestandteile wurden folgende Elemente analysiert: Fe, Al, Ca, Ti, K und Mg.

Tabelle 1

| Beispiel | $\omega_M$ [l/mm] | $\beta_{RM}$ [mm] | $\mu_C$ | Kennzahl K | VQ |
|---|---|---|---|---|---|
| VB 1* | -- | 80 | -- | -- | 0,13 |

(fortgesetzt)

| Beispiel | $\omega_M$ [l/mm] | $\beta_{RM}$ [mm] | $\mu_C$ | Kennzahl K | VQ |
|---|---|---|---|---|---|
| VB 2* | 0,064 | 80 | -0,36 | -1,82 | 0,17 |
| AB 1 | 0,064 | 80 | 0,00 | 0,00 | 0,11 |
| AB 2 | 0,064 | 80 | 0,50 | 2,55 | 0,11 |
| AB 3 | 0,064 | 80 | 1,07 | 5,46 | 0,10 |
| AB 4 | 0,064 | 80 | 1,25 | 6,38 | 0,09 |
| AB 5 | 0,064 | 80 | 1,45 | 7,38 | 0,09 |
| AB 6 | 0,064 | 80 | 1,49 | 7,60 | 0,10 |
| AB 7 | 0,051 | 80 | 1,49 | 6,08 | 0,11 |
| AB 8 | 0,102 | 80 | 1,49 | 12,2 | 0,09 |
| AB 9 | 0,340 | 80 | 1,49 | 40,5 | 0,09 |
| AB 10 | 1,02 | 80 | 1,49 | 122 | 0,12 |
| AB 11 | 3,40 | 80 | 1,49 | 405 | 0,12 |
| AB 12 | 0,200 | 80 | 1,49 | 23,8 | 0,12 |
| AB 13 | 2,00 | 80 | 1,49 | 238 | 0,11 |
| AB 14 | 3,96 | 80 | 1,49 | 472 | 0,12 |
| AB 15 | 3,40 | 125 | 1,49 | 633 | 0,10 |
| AB 16 | 0,200 | 125 | 1,49 | 37,3 | 0,12 |
| AB 17 | 2,00 | 125 | 1,49 | 373 | 0,11 |
| AB 18 | 3,96 | 125 | 1,49 | 738 | 0,12 |
| AB 19 | 4,00 | 125 | 1,49 | 745 | 0,12 |
| * nicht erfindungsgemäß | | | | | |

Die Beispiele belegen, dass die erfindungsgemäße Verwendung von Mediatoren bei der Herstellung von metallurgischem Silicium wirtschaftlich von Vorteil ist.

**Patentansprüche**

1.  Verfahren zur Herstellung von technischem Silicium, bei dem eine Mischung aus einer Rohstoffmischung, die Siliciumdioxid und Kohlenstoff enthält,

    mit einem partikulären Mediator, welcher mindestens eines der Elemente C, O, Al und Si enthält, in einem elektrischen Ofen umgesetzt wird wobei
    die Mischung durch eine dimensionslose Kennzahl K beschrieben ist, wobei K einen Wert von 0 bis 745 aufweist und wie folgt berechnet wird:

$$K = \omega_M \cdot \beta_{RM} \cdot \mu_C \qquad\qquad \text{Gleichung (1)}$$

    mit:

$$\omega_M = \frac{6 \cdot (1 - \varepsilon_{m,M})}{d_{50,M}} \qquad\qquad \text{Gleichung (2)}$$

$$\beta_{RM} = d_{90,RM} - d_{10,RM} \qquad \text{Gleichung (3)}$$

$$\mu_C = \frac{3}{2} - \frac{m_M}{m_{RM}} \qquad \text{Gleichung (4)}$$

wobei:

$\omega_M$ charakteristischer Oberfläche-zu-Volumen-Koeffizient des partikulären Mediators [1/mm]

$\varepsilon_{m,M}$ mittlere, effektive Porosität des partikulären Mediators

$\beta_{RM}$ Breite einer Partikelgrößenverteilung der Mischung [mm]

$\mu_C$ Massenverhältnis von Mediator zu Rohstoffmischung in der Mischung

$d_{50,M}$ Partikelgröße (Durchmesser) bei 50% des Massendurchgangs der Sieblinie des Mediators [mm]

$d_{90,RM}$ Partikelgröße (Durchmesser) bei 90% des Massendurchgangs der Sieblinie der Rohstoffmischung [mm]

$d_{10,RM}$ Partikelgröße (Durchmesser) bei 10% des Massendurchgangs der Sieblinie der Mischung [mm]

$m_M$ Masse des Mediators in der Mischung [kg]

$m_{RM}$ Masse der Rohstoffmischung in der Mischung [kg].

2. Verfahren nach Anspruch 1 bei dem der Mediator Siliciumreste enthält, die ausgewählt werden aus Nebenprodukten oder Abfällen, die bei der Herstellung oder bei der mechanischen Bearbeitung von Silicium anfallen.

3. Verfahren nach Anspruch 2, bei dem der Mediator mindestens 10 Masse-% Siliciumreste enthält.

4. Verfahren nach einem oder mehreren der voranstehenden Ansprüche, bei dem das Siliciumdioxid in der Rohstoffmischung aus Quarz und Quarzit ausgewählt wird.

5. Verfahren nach einem oder mehreren der voranstehenden Ansprüche, bei dem der Kohlenstoff in der Rohstoffmischung aus Koks, Petrolkoks, Steinkohle, Holzkohle und Holzteilchen ausgewählt wird.

6. Verfahren nach einem oder mehreren der voranstehenden Ansprüche, bei dem der Anteil des Mediators in der Mischung aus Rohstoffmischung und Mediator vorzugsweise 1 bis 60 Masse-% beträgt.

7. Verfahren nach einem oder mehreren der voranstehenden Ansprüche, bei dem das Mol-Verhältnis Si/C$_{fixiert}$ in der Rohstoffmischung 0,2 bis 0,7 beträgt, wobei Cfixiert jener feste, brennbare Rückstand eines C-haltigen Materials ist, der nach Erhitzen einer Probe für eine Dauer von sieben Minuten bei 900 °C - um seine flüchtigen Bestandteile verringert - zurückbleibt und C$_{fixiert}$ mittels LECO TGA701 (http://www.leco.co.za/wp-content/uploads/2012/02/TGA701_COKEO203-821-381.pdf; Probenvorbereitung gemäß ASTM Method D2013 oder ASTM Practice D346) bestimmt wird.

**Claims**

1. Method for producing technical-grade silicon,

in which a mixture of a raw material mixture containing silicon dioxide and carbon
with a particulate mediator containing at least one of the elements C, O, Al and Si is reacted in an electric furnace, wherein
the mixture is described by a dimensionless index K, K having a value of from 0 to 745 and being calculated as follows:

$$K = \omega_M \cdot \beta_{RM} \cdot \mu_C \qquad \text{equation (1)}$$

where:

$$\omega_M = \frac{6 \cdot (1 - \varepsilon_{m,M})}{d_{50,M}} \qquad\qquad \text{equation (2)}$$

$$\beta_{RM} = d_{90,RM} - d_{10,RM} \qquad\qquad \text{equation (3)}$$

$$\mu_C = \frac{3}{2} - \frac{m_M}{m_{RM}} \qquad\qquad \text{equation (4)}$$

where:

$\omega_M$ characteristic surface area-to-volume coefficient of the particulate mediator [1/mm]

$\varepsilon_{m,M}$ mean, effective porosity of the particulate mediator $\beta_{RM}$ breadth of a particle size distribution of the mixture [mm]

$\mu_C$ mass ratio of mediator to raw material mixture in the mixture

$d_{50,M}$ particle size (diameter) at 50% of the mass undersize of the grading curve of the mediator [mm] $d_{90,RM}$ particle size (diameter) at 90% of the mass undersize of the grading curve of the raw material mixture [mm]

$d_{10,RM}$ particle size (diameter) at 10% of the mass undersize of the grading curve of the mixture [mm]

$m_M$ mass of the mediator in the mixture [kg]

$m_{RM}$ mass of the raw material mixture in the mixture [kg].

2. Method according to Claim 1, in which the mediator contains silicon residues which are selected from byproducts or wastes arising in the production or in the mechanical treatment of silicon.

3. Method according to Claim 2, in which the mediator contains at least 10% by mass of silicon residues.

4. Method according to one or more of the preceding claims, in which the silicon dioxide in the raw material mixture is selected from quartz and quartzite.

5. Method according to one or more of the preceding claims, in which the carbon in the raw material mixture is selected from coke, petroleum coke, bituminous coal, charcoal and wood particles.

6. Method according to one or more of the preceding claims, in which the proportion of the mediator in the mixture of raw material mixture and mediator is preferably 1% to 60% by mass.

7. Method according to one or more of the preceding claims, in which the $Si/C_{fixed}$ molar ratio in the raw material mixture is 0.2 to 0.7, wherein $C_{fixed}$ is the solid, combustible residue of a carbon-containing material which remains after heating a sample at 900°C for a period of seven minutes - in order to reduce the volatile constituents thereof - and $C_{fixed}$ is determined by means of a LECO TGA701 instrument (http://www.leco.co.za/wp-content/uploads/2012/02/TGA701_COKE_203-821-381.pdf; sample preparation according to ASTM Method D2013 or ASTM Practice D346).

## Revendications

1. Procédé de fabrication de silicium technique, dans lequel on fait réagir dans un four électrique un mélange constitué d'un mélange de matières premières qui contient du dioxyde de silicium et du carbone, avec un médiateur particulaire qui contient au moins l'un des éléments C, O, Al et Si,

dans lequel le mélange est décrit par un paramètre sans dimension K, K ayant une valeur de 0 à 745 et étant calculé comme suit :

$$K = \omega_M \cdot \beta_{RM} \cdot \mu_C \qquad\qquad \text{Équation (1)}$$

avec

$$\omega_M = \frac{6 \cdot (1 - \varepsilon_{m,M})}{d_{50,M}} \qquad \text{Équation (2)}$$

$$\beta_{RM} = d_{90,RM} - d_{10,RM} \qquad \text{Équation (3)}$$

$$\mu_C = \frac{3}{2} - \frac{m_M}{m_{RM}} \qquad \text{Équation (4)}$$

où :

$\omega_M$ est le coefficient caractéristique aire/volume du médiateur particulaire [1/mm]

$\varepsilon_{m,M}$ est la porosité effective moyenne du médiateur particulaire

$\beta_{RM}$ est la largeur d'une distribution granulométrique du mélange [mm]

$\mu_C$ est le rapport en masse du médiateur au mélange de matières premières dans le mélange

$d_{50,M}$ est la granulométrie (diamètre) à 50 % du passant cumulé en masse de la courbe granulométrique du médiateur [mm]

$d_{90,RM}$ est la granulométrie (diamètre) à 90 % du passant cumulé en masse de la courbe granulométrique du mélange de matières premières [mm]

$d_{10,RM}$ est la granulométrie (diamètre) à 10 % du passant cumulé en masse de la courbe granulométrique du mélange [mm]

$m_M$ est la masse du médiateur dans le mélange [kg]

$m_{RM}$ est la masse du mélange de matières premières dans le mélange [kg].

2.  Procédé selon la revendication 1, dans lequel le médiateur contient des résidus de silicium, qui sont choisis parmi les sous-produits ou déchets qui sont obtenus lors de la fabrication ou lors de l'usinage mécanique de silicium.

3.  Procédé selon la revendication 2, dans lequel le médiateur contient au moins 10 % en masse de résidus de silicium.

4.  Procédé selon l'une ou plusieurs des revendications précédentes, dans lequel le dioxyde de silicium du mélange de matières premières est choisi parmi le quartz et la quartzite.

5.  Procédé selon l'une ou plusieurs des revendications précédentes, dans lequel le carbone du mélange de matières premières est choisi parmi le coke, le coke de pétrole, le charbon, le charbon de bois et les particules de bois.

6.  Procédé selon l'une ou plusieurs des revendications précédentes, dans lequel la proportion du médiateur dans le mélange constitué du mélange de matières premières et du médiateur est de préférence de 1 à 60 % en masse.

7.  Procédé selon l'une ou plusieurs des revendications précédentes, dans lequel le rapport en moles $Si/C_{fixé}$ du mélange de matières premières est de 0,2 à 0,7, $C_{fixé}$ étant le résidu solide combustible d'un matériau carboné qui, après chauffage d'un échantillon pendant une durée de sept minutes à 900 °C reste après déduction de ces constituants volatils, et $C_{fixé}$ est déterminé par LECO TGA701 (http://www.leco.co.za/wp-content/uploads/2012/02/TGA701_COKE_203-821-381.pdf ; préparation d'une éprouvette selon la méthode ASTM D2013 ou la pratique ASTM D346).

**IN DER BESCHREIBUNG AUFGEFÜHRTE DOKUMENTE**

**In der Beschreibung aufgeführte Patentdokumente**

- CN 109052407 A
- EP 0699625 A1
- WO 2010037709 A1


**In der Beschreibung aufgeführte Nicht-Patentliteratur**

- **A. SCHEI ; J.K. TUSET ; H. TVEIT.** *Production of High Silicon Alloys,* 1998
- **R. C. BRENEMAN ; J. W. HALLORAN.** Kinetics of Cristobalite Formation in Sintered Silica Glass. *J. Am. Ceram. Soc.,* 2014, vol. 97, 2272-8